# EUROPEAN PATENT APPLICATION

(11) **EP 4 056 616 A1**
(43) Date of publication of application: **14.09.2022**
(21) Application number: 21161311.2
(22) Date of filing: 08.03.2021
(51) Int. Cl.: C08G 18/38, C08G 18/72, C08G 18/73, C08G 18/78, C08G 18/79, C09D 175/12

(54) **TWO-COMPONENT COATING SYSTEM**

(71) Applicant: Covestro Deutschland AG, 51373 Leverkusen (DE)
(72) Inventor: The designation of the inventor has not yet been filed
(74) Representative: Levpat

(57) **Abstract**

The invention relates to a two-component coating system and a preparation method and use thereof, as well as grout or caulk comprising the coating system. The two-component coating system comprises component A comprising a polyaspartic acid ester and component B comprising a polyisocyanate, wherein the polyisocyanate has isocyanate functionality of not less than 4, and the polyisocyanate comprises allophanate groups and isocyanurate groups, and the ratio of moles of the allophanate groups to the sum of moles of the isocyanurate groups and the allophanate groups is of not less than 65:100. The two-component coating system of the present invention forms a coating with small bubble area and good resistance to yellowing and to stain resistance.

## Description

### Technical Field

The invention relates to a two-component coating system and a preparation method and use thereof, as well as grout or caulk comprising the coating system.

### Prior Art

Two-component coating systems comprising polyaspartic acid esterpolyaspartic acid esters are widely used in the construction industry due to their excellent performance. Two-component systems usually comprise a resin component comprising a polyaspartic acid ester and a curing agent component comprising an isocyanate. The isocyanate reacts with the polyaspartic acid ester to form a highly cross-linked polyurea network, and form a coating with excellent mechanical properties, chemical resistance, stain resistance and weather resistance on a surface of a substrate such as concrete, metal and the like.

For example, CN102300893A provides a two-component coating system comprising polyisocyanate, which is composed of the following components: a. a polyisocyanate based on an aromatic prepolymer containing allophanate groups, and b. a polyisocyanate based on (cyclo)aliphatic polyisocyanate; and an amino-functional crosslinking agent based on polyetheramines, low molecular weight aliphatic, cycloaliphatic and aromatic diamines, wherein up to 49% by weight of the amino-functional crosslinking agent can be replaced by an amino-functional polyaspartic acid ester. The coating system has a long pot life and low viscosity, and can be used to prepare fast-drying, clear, viscoelastic and hard coating with good application-related properties such as elasticity and hardness.

CN1267694A provides a method for preparing polyurea coating, which comprises preparing a coating composition comprising a polyisocyanate component and an isocyanate-active component, applying the coating composition on a substrate, and curing at a temperature below 100°C, characterized in that the isocyanate reactive component comprises the reaction product of a diester of maleic acid or fumaric acid and a polyamine, wherein the polyamine may have two primary amino groups and at least one additional functional group that can react with isocyanate at a temperature lower than 100°C, and the reaction product has at least 10 eq% of unreacted isocyanate-active groups.

The pot life (gel time) of the existing two-component coating systems comprising polyaspartic acid ester is usually only a few seconds or a few minutes. coating systems are very prone to blistering in the process of forming a coating with high film thickness, and the resulting coating with high film thickness has large bubble area and poor performance.

Therefore, it is desired to develop a coating system that can form a coating with high film thickness, small bubble area and excellent performance.

### Summary of the invention

The object of the present invention is to provide a two-component coating system and a preparation method and use thereof, as well as grout or caulk comprising the coating system.

The two-component coating system of the present invention comprises component A comprising a polyaspartic acid ester and component B comprising a polyisocyanate, wherein the polyisocyanate has isocyanate functionality of not less than 4, and the polyisocyanate comprises allophanate groups and isocyanurate groups, and the ratio of moles of the allophanate groups to the sum of moles of the isocyanurate groups and the allophanate groups is of not less than 65:100.

According to one aspect of the present invention, a method for preparing the two-component coating system according to the present invention by mixing component A comprising a polyaspartic acid ester and component B comprising a polyisocyanate in any desired manner is provided; wherein the polyisocyanate has isocyanate functionality of not less than 4, and the polyisocyanate comprises allophanate groups and isocyanurate groups, and the ratio of moles of the allophanate groups to the sum of moles of the isocyanurate groups and the allophanate groups is of not less than 65:100.

According to still another aspect of the present invention, use of the two-component coating system according to the present invention for filling gaps between substrates is provided.

According to still another aspect of the present invention, grout or caulk comprising the two-component coating system according to the present invention is provided .

According to yet another aspect of the present invention, a product comprising a substrate and a coating formed by drying and curing the two-component coating system of the present invention is provided.

According to yet another aspect of the present invention, a method for producing a coating on a substrate is provided, which comprises applying the two-component coating system according to the present invention on the substrate, and then curing and drying.

According to yet another aspect of the present invention, a method for producing a coating on a substrate is provided, which comprises applying the grout or the caulk comprising the two-component coating system according to the present invention on the substrate, and then curing and drying.

The two-component coating system of the present invention can form a coating with a high film thickness, especially a film thickness of 2-10mm, especially 2-5mm. The coating system is not prone to blistering during curing and drying. The formed coating has a smooth surface and small bubble area.

The coating with a high film thickness formed by the two-component coating system of the present invention has excellent properties, such as excellent stain resistance and resistance to yellowing.

By using solvent-free polyaspartic acid ester and polyisocyanate with high solid content, the two-component coating system of the present invention has the advantages of no odor of solvent, safe use, and no environmental pollution.

The caulk or grout comprising the two-component coating system of the present invention is applied to the gaps between the substrates, especially the gaps between metals or ceramic tiles. The cured coating system to form a coating with a high film thickness which has a smooth surface, small bubble area and excellent properties, such as excellent mechanical properties, weather resistance, stain resistance, resistance to yellowing, chemical resistance, and high working efficiency, etc.

### Embodiments

The present invention provides a two-component coating system comprising component A comprising a polyaspartic acid ester and component B comprising a polyisocyanate, wherein the polyisocyanate has isocyanate functionality of not less than 4, and the polyisocyanate comprises allophanate groups and isocyanurate groups, and the ratio of moles of the allophanate groups to the sum of moles of the isocyanurate groups and the allophanate groups is of not less than 65:100. The present invention also provides a preparation method and use of the two-component coating system, as well as grout or caulk comprising the coating system.

The term "two-component coating system" used herein refers to a coating composition comprising at least two components, which have to be stored in separate containers due to their reactivity with each other. When these two separate components are mixed and applied to a substrate, the reactive compounds in the two components react with each other to crosslink and form a cured coating.

The term "coating composition" used herein refers to a chemical composition that can be applied to a surface of an object by a variety of processes to form a continuous solid coating with firm adhesion and certain strength.

The term "curing and drying" used herein refers to a process from a liquid state to a cured state of a coating composition.

The term "each independently" used herein means that R may be identical or different.

The term "non-reactive toward isocyanate" or "non-reactive toward isocyanate groups" used herein indicates that the organic group is inert to isocyanate groups at a temperature of 150°C or lower.

### Two-component coating system

The equivalent ratio of the isocyanate groups of component B to the amino groups of component A is preferably of 0.5:1-10:1, and most preferably of 2:1-4:1.

The component A and component B of the two-component coating system are preferably stored separately, and mixed prior to use to give the two-component coating system.

### Polyaspartic acid ester of component A

The polyaspartic acid ester preferably has the structure of formula I: 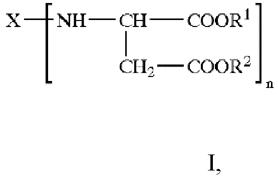 wherein,
X represents a n-valent organic segment that is non-reactive toward isocyanate groups at a temperature less than or equal to 100°C,
R¹ and R² are each independently organic groups that are non-reactive toward isocyanate groups under normal pressure and at a temperature less than or equal to 100°C,
n is an integer not less than 2.

X has preferably a structure that is one or more of aliphatic structures, araliphatic structures and cycloaliphatic structure, and most preferably cycloaliphatic structures.

### n is most preferably 2.

The polyaspartic acid ester may be prepared by reacting a primary polyamine or a polyether polyamine with a compound having at least one olefinic double bond in a known manner. The compound having at least one olefinic double bond preferably has one olefinic double bond; and is most preferably one or more of maleates and fumarates. The reaction can be carried out in the absence of a solvent or in the presence of a suitable solvent. The solvent is preferably one that is non-reactive toward isocyanate, for example, it may be selected from one or more of alcohols, ethers, acetates, and ketones. The alcohol may be methanol, ethanol, butyl glycol or propanol. The acetate may be n-butyl acetate. The ketone may be methyl ethyl ketone.

The polyaspartic acid ester is most preferably obtained by the reaction of a polyamine of formula II and a maleate and/or a fumarate of formula III:

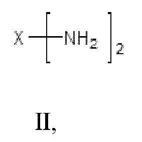

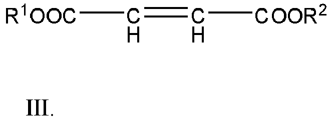

The polyamine may be a primary polyamine and/or a polyether polyamine.

X of formula II may be a n-valent organic group obtained by removing the amino groups in the primary polyamine or the polyether polyamine, preferably a divalent hydrocarbyl group obtained by removing the amino groups in the primary polyamine or the polyether polyamine, and most preferably a divalent hydrocarbyl group obtained by removing the amino groups of the primary polyamine.

The primary polyamine is preferably one or more of ethylenediamine, 1,2-diaminopropane, 1,4-diaminobutane, 1,3-diaminopentane, 1,6-diaminohexane, 2,5-diamino-2,5-dimethylhexane, 2,2,4-tnmethyl-1,6-diarninohexane, 2,4,4-trimethyl-1,6-diaminohexane, 1,11-diaminoundecane, 1,12-diaminododecane, 1,3-cyclohexanediamine and 1,4-cyclohexanediamine, amino-3,3,5-trimethyl-5-aminomethyl-cyclohexane, 2,4-hexahydrotoluenediamine, 2,6-hexahydrotoluenediamine, 2,4'-diaminodicyclohexylmethane, 4,4'-diaminodicyclohexylmethane, 3,3'-dialkyl-4,4'-diamino-dicyclohexylmethane, 2,4,4'-triamino-5-methyldicyclohexylmethane, 2-methyl-1,5-pentanediamine, 1,3-xylenediamine and 1,4-xylenediamine; and more preferably one or more of amino-3,3,5-trimethyl-5-aminomethylcyclohexane, 2,4'-diamino-dicyclohexylmethane, 3,3'-dialkyl-4,4'-diaminodicyclohexylmethane, 4,4'-diamino-dicyclohexylmethane and 2-methyl-1,5-pentanediamine; and most preferably one or more of 2,4'-diamino-dicyclohexylmethane and 4,4'-diamino-dicyclohexylmethane.

The number average molecular weight of the polyether polyamine is preferably 148-600. The polyether polyamine has most preferably aliphatically bonded primary amino groups.

R¹ and R² of the general formula III are preferably organic groups that are non-reactive toward isocyanate. R¹ and R² may be identical or different. Most preferably, R¹ and R² are each independently methyl, ethyl or n-butyl.

The maleate or the fumarate is preferably one substituted by one or more of the following groups: dimethyl ester, diethyl ester, dibutyl ester such as di-n-butyl ester, di-sec-butyl ester or di-tert-butyl ester, dipentyl ester, di-2-ethylhexyl ester, which may be substituted by a methyl group at 2. position and 3. position.

The maleate is more preferably one or more of dimethyl maleate, diethyl maleate, and dibutyl maleate, and most preferably diethyl maleate.

The polyaspartic acid ester includes preferably Desmophen NH1420 (available from Covestro Polymers (China) Co., Ltd.) and optionally other aspartates. The amount of Desmophen NH1420 is preferably greater than 50% by weight, more preferably greater than 60% by weight, and most preferably 100% by weight, relative to the total weight of the polyaspartic acid ester.

### Component B

The polyisocyanate is a general term for one or more oligomers containing two or more isocyanate groups. The oligomer comprises at least two monomeric diisocyanate molecules, which means that it is a compound that contains or represents the reaction product of at least two monomeric diisocyanate molecules. The monomeric diisocyanate molecules have a general structure O=C=N-R-N=C=O, wherein R usually represents an aliphatic, cycloaliphatic and/or araliphatic group.

When component B comprises two or more polyisocyanates, the isocyanate functionality refers to the average isocyanate functionality of the polyisocyanates.

When component B comprises two or more polyisocyanates, the allophanate group and the isocyanurate group may be present in the same polyisocyanate or may be present in different polyisocyanates. It is most preferable that the allophanate group and the isocyanurate group are present in the same polyisocyanate.

When component B comprises two or more polyisocyanates, the moles of allophanate groups refer to the sum of the moles of allophanate groups of the polyisocyanates, and the moles of isocyanurate groups refer to the sum of the moles of isocyanurate groups of the polyisocyanates. The moles of allophanate groups and the moles of isocyanurate groups are both determined by the C-NMR method.

The ratio of moles of the allophanate groups to the sum of moles of the isocyanurates group and the allophanate groups is preferably not less than 68:100 and less than 1:1, more preferably 68 : 100-85:100, and most preferably 68:100-80:100. The calculation method is as follows:
Ratio of moles of the allophanate groups to the sum of moles of the isocyanurate groups and the allophanate groups = moles of the allophanate groups/(moles of the allophanate groups + moles of the isocyanurate groups),
wherein the moles of the allophanate groups and the moles of the isocyanurate groups are both determined by the C-NMR method.

The isocyanate functionality of the polyisocyanate is preferably of 4-10, and most preferably 4.4-6.

The isocyanate group content in the polyisocyanate is preferably 5% by weight to 30% by weight, relative to the total weight of the polyisocyanate. When component B comprises two or more polyisocyanates, the isocyanate group content refers to the average isocyanate group contents of the polyisocyanates.

The solid content of the polyisocyanate is preferably 50% by weight to 100% by weight, relative to the total weight of the polyisocyanate.

The monomeric diisocyanate suitable for preparing the polyisocyanate of the two-component coating system of the present invention is preferably one having a molecular weight of 140 g/mol-400 g/mol, and more preferably 1,4-diisocyanatobutane, 1,5-diisocyanatopentane (PDI), 1,6-diisocyanatohexane (HDI), 1,5-diisocyanato-2,2-dimethylpentane, 2,2,4- and 2,4,4-trimethyl-1,6-diisocyanatohexane, 1,8-diisocyanatooctane, 1,9-diisocyanatononane, 1,10-diisocyanatodecane, 1,3-and 1,4-diisocyanatocyclohexane, 1,4-diisocyanato-3,3,5-trimethylcyclohexane, 1,3-diisocyanato-2-methylcyclohexane, 1,3-diisocyanato-4-methylcyclohexane, 1-isocyanato-3,3,5-trimethyl-5-isocyanatomethylcyclohexane (isophorone diisocyanate, IPDI), 1-isocyanato-1-methyl-4(3)-isocyanatomethylcyclohexane, 2,4'- and 4,4'-diisocyanatodicyclohexylmethane (H12MDI), bis(isocyanatomethyl)norbornane (NBDI), 1,3- and 1,4-bis(isocyanatomethyl)cyclohexane, 4,4'-diisocyanato-3,3'-dimethyldicyclohexylmethane, 4,4'-diisocyanato-3,3',5,5'-tetramethyldicyclohexylmethane, 4,4'-diisocyanato-1,1'-bi(cyclohexyl), 4,4'-diisocyanato-3,3'-dimethyl-1,1'-bi(cyclohexyl), 4,4'-diisocyanato-2,2',5,5'-tetratnethyl-1,1'-bi (cyclohexyl), 1,8-diisocyanato-p-menthane, 1,3-diisocyanato-adamantane, 1,3-dimethyl-5,7-diisocyanato-adamantane, 1,3- and 1,4-bis(isocyanatomethyl)benzene (XDI), 1,3- and 1,4-bis(1-isocyanato-1-methylethyl)benzene (TMXDI), bis(4-(1-isocyanato-1-methylethyl)phenyl) carbonate, 1,3- and 1,4-phenylene diisocyanate, 2,4- and 2,6-toluene diisocyanate and any desired mixtures of these isomers, diphenylmethane-2,4'- and/or 4,4'-diisocyanate and 1,5-naphthalene diisocyanate; most preferably a linear aliphatic diisocyanate.

The monomeric diisocyanate can be reacted by various modification methods known per se to form the polyisocyanate of the two-component coating system of the present invention.

The hydroxy-functional compound suitable for preparing the polyisocyanate may be one or more of monohydric alcohols having up to 14 carbon atoms and polyols having up to 14 carbon atoms; most preferably one or more of monohydric alcohols having 2-6 carbon atoms and polyhydric alcohols having 2-6 carbon atoms.

The hydroxyl-functional compound suitable for preparing the polyisocyanate may also be a polyhydroxy compound having a relatively high molecular weight known per se, including polyesters, polycarbonates, polyester carbonates or polyethers, more particularly those having a molecular weight of 200 g/mol-2000 g/mol.

Polyester polyols suitable as hydroxyl-functional compounds are, for example, those having an average molecular weight of 200 g/mol-4000 g/mol, preferably 250 g/mol-2500 g/mol, which can be calculated from the functionality and the hydroxyl number, and hydroxyl group content of 1% by weight to 21% by weight, preferably of 2% by weight to 18% by weight, and can be prepared in a conventional manner by reacting polyols (examples are those having 2 to 14 carbon atoms mentioned above) with a sub-stoichiometric amount of polycarboxylic acids, corresponding carboxylic anhydrides, and polycarboxylic acid esters of corresponding lower alcohols or lactones.

The acid or acid derivative for preparing the polyester polyol is preferably aliphatic, cycloaliphatic and/or aromatic in nature, and may be optionally saturated or unsaturated substituted by, for example, halogen atoms. Examples of suitable acids are polycarboxylic acids or their derivatives with a molecular weight of 118 g/mol-300 g/mol, such as succinic acid, adipic acid, sebacic acid, phthalic acid, isophthalic acid, trimellitic acid, phthalic anhydride, tetrahydrophthalic acid, maleic acid, maleic anhydride, dimerized and trimerized fatty acids, dimethyl terephthalate and diethylene glycol terephthalate.

Polyhydroxy compounds of polycarbonate type suitable as hydroxy-functional compounds are particularly polycarbonate diols known per se, which can be prepared, for example, by reacting diols (such as those exemplified above in the list of polyols having a molecular weight of 62 g/mol-400 g/mol) with diaryl carbonates (such as diphenyl carbonate), dialkyl carbonates (such as dimethyl carbonate) or phosgene.

Polyhydroxy compounds of polyester carbonate type suitable as hydroxy-functional compounds are particularly conventional diols containing a ester group and a carbonate group, for example, which can be obtained according to the teachings of DE-A 1 770 245 or WO 03/002630 by reacting diols with lactones of the type exemplified above (more particularly ε-caprolactone), and then reacting the resulting polyester diols with diphenyl carbonate or dimethyl carbonate.

Polyester polyols suitable as hydroxyl-functional compounds are, in particular, those which have an average molecular weight of 200 g/mol to 4000 g/mol, preferably 250 g/mol to 2500 g/mol, which can be calculated from the functionality and the hydroxyl number, and hydroxyl group content of 0.8% by weight to 25% by weight, preferably of 1.8% by weight to 20% by weight, and can be prepared in a conventional manner by alkoxylation of suitable starter molecules. The starter molecules are preferably polyols having 2-14 carbon atoms as described above.

### Additive

The two-component coating system may further comprise an additive. The additive is selected from one or more of pigments such as organic pigments, inorganic pigments, metallic pigments or pearlescent pigments, wetting agents, matting agents, defoamers, film formers, thickeners, elastic agents, catalysts, UV absorbers, and other additives that can be added to the coating composition as is well known to those skilled in the art.

The additive may be added in an amount which is well known to those skilled in the art.

### Substrate

The substrate is preferably artificial stone, wood, artificial wood, marble, terrazzo, ceramic, ceramic tile, felt, metal, plastic, rubber, concrete, composite board, paper, leather or glass, most preferably concrete, metal or ceramic tile.

The substrate may be pre-treated. The pre-treatment may be polishing or coating.

### Product

The product is preferably windows, mirrors, furniture, bicycles, cars, road signs, bridges, books, boxes or materials for construction and decoration.

### Examples

Unless defined otherwise, all technical and scientific terms used herein have the same meaning as commonly understood by those skilled in the art. When the definition of a term in this specification conflicts with the meanings commonly understood by those skilled in the art, the definition described herein shall prevail.

Unless indicated otherwise, all numbers expressing quantities of ingredients, reaction conditions and the like used in the specification and claims are to be understood as being modified by the wording "about". Accordingly, unless indicated to the contrary, the numerical parameters set forth herein are approximations that can vary depending upon the desired properties to be obtained.

The wording "and/or" used herein refers to one or all of the cited elements.

The wording "include" and "comprise" used herein cover the presence of the mentioned elements alone and the presence of other unmentioned elements in addition to the mentioned elements.

All percentages in the present invention are weight percentages, unless otherwise stated.

The analysis and measurement in the present invention are performed at 23±2°C, unless otherwise stated.

The isocyanate group (NCO) content is determined by volume in accordance with DIN-EN ISO 11909. The measured data include free and potentially free NCO content.

Calculation method of isocyanate functionality: isocyanate functionality = MnxNVC/4200,
wherein Mn is the number average molecular weight of the polyisocyanates determined by gel permeation chromatography (GPC) using polystyrene as the standard and tetrahydrofuran as the eluent according to DIN 55672-1:2016-03; and NVC is the weight percentage of the non-volatile components in the polyisocyanates determined by titration according to DIN EN ISO 11909:2007-05.

### Raw materials and agents

Table 1 shows the polyisocyanates in the Examples of the present invention and Comparative Examples.

**Table 1 Polyisocyanates**

| Polyisocyanate | Isocyanate functionality | Ratio of moles of the allophanate groups of the polyisocyanate to the sum of moles of the isocyanurate groups and the allophanate groups of the polyisocyanate | Isocyanate group content, relative to the total weight of the polyisocyanate (based on the form of supply) /% | Solid content /% |
|---|---|---|---|---|
| Desmodur N 3500 | 5.5 | 75 : 100 | 19.5 | 100 |
| DesmodurN 3500 BA (a mixture of Desmodur3500 and butyl acetate with a weight ratio of 4:1) | 5.5 | 75 : 100 | 15.4 | 80 |
| Desmodur XP 2599 | 4 | 83.9 : 100 | 6 | 100 |
| Desmodur N 75 BA | 3.8 | 0 | 16.5 | 75 |
| Desmodur N 3300 | 3.5 | 0 | 21.8 | 100 |
| Desmodur N 3600 | 3.2 | 0 | 23 | 100 |
| Desmodur XP 2675 | 3.9 | 0 | 20 | 100 |
| Desmodur N 3800 | 3.8 | 0 | 11 | 100 |
| Desmodur VP LS2371 | 2 | 0 | 19.5 | 100 |
| Desmodur E 2863XP | 2.2 | 0 | 11 | 100 |
| Desmodur N 2860 | 2.5 | 62 : 100 | 20 | 100 |
| Desmodur N 2840 | 3.0 | 0 | 23 | 100 |

Desmophen NH 2885: polyaspartic acid ester having solid content of 100% by weight, with amino functionality of about 2, and amino equivalent of 279, which is available from Covestro Co., Ltd., Germany.

### Preparation of coatings

The two-component coating systems were defoamed and poured into a 5mm thick mold. They were allowed to stand for three days under standard conditions (0°C, 1 atmosphere), and then demolded to obtain coatings with a thickness of 5mm.

### Evaluation of the bubble condition

The coatings obtained by demolding were dried at room temperature for 7 days. The bubble condition of the coating surfaces was observed visually and rated as 0-5, which indicates gradually increasing bubbles in the coating, with 0 being the best and 5 being the worst. In the present invention, coatings with a bubble condition rated as 1 or 0 are considered qualified. The evaluation criteria for the bubble condition are shown in Table 2:

**Table 2 Evaluation criteria for the bubble condition of coatings**

| Bubble condition | Area ratio (bubble area/coating surface area) | Surface condition of coatings |
|---|---|---|
| 0 | ≤5% | smooth |
| 1 | >5% and ≤20% | smooth |
| 2 | >20% and ≤50% | smooth |
| 3 | >50% and ≤80% | smooth |
| 4 | >80% and ≤100% | smooth |
| 5 | / | Uneven or cracked |

### Evaluation of stain resistance of coatings

The stain resistance of coatings was tested using the test method for stain resistance of architectural coatings in accordance with JG/T 463-2014. According to the pollutants and requirements thereof and shown in Table 3. The coatings were contaminated for 1 hour with each pollutant, and then washed, and evaluated for the stain resistance. The description of washing steps and the criteria and levels for evaluating stain resistance are shown in Table 4. The stain resistance of the coatings was rated as level 1-5, which indicates gradually deteriorating stain resistance, with level 1 being the best and level 5 being the worst. In the present invention, the coatings with stain resistance of level 2 or 1 are considered qualified.

**Table 3 Pollutants and requirements thereof for stain resistance test**

| No. | Pollutants | Requirement |
|---|---|---|
| 1 | Blue-black ink | Ink in accordance with 6.2.2.3 of GB/T9780-2013 |
| 2 | Red Wine | Red Wine in accordance with GB 15037 |
| 3 | Black tea | Black tea in accordance with 6.2.2.2 of GB/T9780-20 13 |
| 4 | Soy sauce | Dilute fermented soy sauce with high salt content in accordance with GB/T18186 |
| 5 | Vinegar | Vinegar in accordance with 6.2.2.1 of GB/T9780-20 13 |

**Table 4 Washing process and evaluating method of the stain resistance of coatings**

| Steps | Washing process and evaluation of stain resistance |
|---|---|
| 1 | The contaminated coating surface was scrubbed using gauze under running water, and the coating surface was visually observed after drying. If there was no obvious trace of contamination, the stain resistance of the coating was rated as level 1. |
| 2 | If there was still obvious trace of contamination, the coating surface was scrubbed using gauze dipped with alcohol, neutral detergent or other non-corrosive detergent, washed using running water, and observed visually after drying. If there was no obvious trace of contamination, the stain resistance of the coating was rated as level 2. |
| 3 | If there was still obvious trace of contamination, the coating surface was wiped back and forth 20 times using gauze dipped with decontamination powder, washed using running water, and observed visually after drying. If there was no obvious trace of contamination, the stain resistance of the coating was rated as level 3. |
| 4 | If there was still obvious trace of contamination, the coating surface was wiped back and forth 40 times using gauze dipped with decontamination powder, washed with running water, and observed visually after drying. If there was no obvious trace of contamination, the stain resistance of the coating was rated as level 4. The stain resistance of other coatings was rated as level 5. |

### Evaluation of resistance to yellowing of coatings

The resistance to yellowing of coatings was evaluated by the method for resistance to yellowing of wood coatings according to GB/T 23983-2009, using UVA340 lamps with the irradiation intensity of 0.68 W/m² and the cumulative irradiation time of 48 hours. The discoloration of the coatings was rated according to 4.2 of GB/T1766-2008. The criteria for evaluating the resistance to yellowing of coatings are listed in Table 5. The resistance to yellowing of coatings was rated as level 0-5, which indicates the gradually increasing degree of discoloration of the coatings, that is, the gradually deteriorating resistance to yellowing of coatings, with level 0 being the best and level 5 being the worst. In the present invention, the coatings with level 0 in both visual observation and instrumental measurement are considered qualified.

**Table 5 Method for evaluating resistance to yellowing of coatings**

| Level | Degree of discoloration (visual observation) | Difference of color values (instrumental measurement) |
|---|---|---|
| 0 | No discoloration | ≤1.5 |
| 1 | Very slight discoloration | 1.6-3.0 |
| 2 | Slight discoloration | 3.1-6.0 |
| 3 | Obvious discoloration | 6.1-9.0 |
| 4 | Significant discoloration | 9.1-12 |
| 5 | Severe discoloration | >12 |

### Preparation of two-component coating systems

Table 6 shows the composition of two-component coating systems and the performance test results of the coatings formed from the coating systems. According to the components and their contents of the coating systems shown in Table 6, the polyaspartic acid ester and the polyisocyanate were mixed and stirred manually for 3 minutes to obtain coating systems of the Examples and Comparative Examples with NCO/NH equivalent ratio of 3:1.

**Table 6 Composition of two-component coating systems of the Example and the Comparative Example and performance results of their coatings**

| | Composition of the two-component coating systems | | | Isocyanate functionality of polyisocyanates | Ratio of moles of the allophanate groups to the sum of moles of the isocyanurate groups and the allophanate groups | Coating performance | | |
|---|---|---|---|---|---|---|---|---|
| | Polyaspartic acid ester | Poly isocyanate | Weight ratio | | | Bubble condition | Stain resistance | Resistance to yellowing |
| Examples 1 | Desmophen NH 2885 | Desmodur N 3500 | 10:23.5 | 5.5 | 75 : 100 | 0 | 1 | 0 |
| Examples 2 | Desmophen NH 2885 | Desmodur N3500 BA | 10:29.5 | 5.5 | 75 : 100 | 0 | 1 | 0 |
| Examples 3 | Desmophen NH 2885 | Desmodur N 3500/ DesmodurN 2860 (weight ratio of 9:1) | 10:23.33 | 4.9 | 71.4 : 100 | 0 | 1 | 0 |
| Examples 4 | Desmophen NH 2885 | Desmodur N 3500/ Desmodur N 2860 (weight ratio of 8:2) | 10:23.75 | 4.4 | 68.5 : 100 | 0 | 1 | 0 |
| Examples 5 | Desmophen NH 2885 | Desmodur N 3500/ DesmodurN 2840 (weight ratio of 9:1) | 10:22.78 | 5.0 | 69.3 : 100 | 0 | 1 | 0 |
| Examples 6 | Desmophen NH 2885 | Desmodur XP 2599 | 10:76 | 4 | 83.9: 100 | 1 | 2 | 0 |
| Comparative Example 1 | Desmophen NH 2885 | Desmodur N 75 BA | 10:27.5 | 3.8 | 0 | 4 | 1 | 0 |
| Comparative Example 2 | Desmophen NH 2885 | Desmodur N 3300 | 10:21 | 3.5 | 0 | 3 | 1 | 0 |
| Comparative Example 3 | Desmophen NH 2885 | Desmodur N 3600 | 10:20 | 3.2 | 0 | 3 | 1 | 0 |
| Comparative Example 4 | Desmophen NH 2885 | Desmodur XP 2675 | 10:23 | 3.9 | 0 | 2 | 1 | 0 |
| Comparative Example 5 | Desmophen NH 2885 | Desmodur N 3800 | 10:41.5 | 3.8 | 0 | 2 | 1 | 0 |
| Comparative Example 6 | Desmophen NH 2885 | Desmodur VP LS2371 | 10:119 | 2 | 0 | 0 | 3 | 0 |
| Comparative Example 7 | Desmophen NH 2885 | Desmodur E 2863XP | 10:41 | 2.2 | 0 | 4 | 2 | 0 |
| Comparative Example 8 | Desmophen NH 2885 | Desmodur N 2840 | 10:20 | 3.0 | 0 | 5 | 1 | 0 |
| Comparative Example 9 | Desmophen NH 2885 | Desmodur N 2860 | 10:23.5 | 2.5 | 62 : 100 | 5 | 1 | 0 |
| Comparative Example 10 | Desmophen NH 2885 | Desmodur N 3500/ Desmodur N 3600 (weight ratio of 10:2.6) | 10:26.72 | 4.7 | 59 : 100 | 2 | 1 | 0 |
| Comparative Example 11 | Desmophen NH 2885 | Desmodur N 3500/ Desmodur N 3600 (weight ratio of 10:7.2) | 10:24.56 | 4.2 | 51.7 : 100 | 3 | 1 | 0 |
| Comparative Example 12 | Desmophen NH 2885 | Desmodur N 3500/ Desmodur N 2860 (weight ratio of 7:3) | 10:23.57 | 4.0 | 62.8 : 100 | 2 | 1 | 0 |
| Comparative Example 13 | Desmophen NH 2885 | Desmodur N 3500/ Desmodur N 2840 (weight ratio of 8:2) | 10:22.5 | 4.6 | 46.3 : 100 | 2 | 1 | 0 |
| Comparative Example 14 | Desmophen NH 2885 | Desmodur N 3500/ Desmodur N 2840 (weight ratio of 7:3) | 10:22.14 | 4.3 | 64.3 : 100 | 3 | 1 | 0 |

| | | | | | | | | |
|---|---|---|---|---|---|---|---|---|
| Note: The weight ratio refers to the weight ratio of the polyaspartic acid ester to the polyisocyanate in the system. The weight of the polyisocyanate refers to the weight sum of the polyisocyanates when the coating system comprises two or more polyisocyanates. | | | | | | | | |

The two-component coating systems of Examples 1-6 formed coatings with a film thickness of 5 mm, which had a smooth surface, small bubble area, and excellent stain resistance and resistance to yellowing.

The two-component coating systems of Comparative Examples 1-8 comprised a polyisocyanate with isocyanate functionality of less than 4 and having no allophanate group. The coating with a thickness of 5 mm formed by the coating systems had large bubble area or poor stain resistance.

The two-component coating system of Comparative Example 9 comprised a polyisocyanate with isocyanate functionality of less than 4. The ratio of moles of the allophanate groups to the sum of moles of the isocyanurate groups and the allophanate groups of the polyisocyanate contained in the coating system was less than 65:100. The coating with a film thickness of 5 mm formed by the coating system had large bubble area.

The ratio of moles of the allophanate groups to the sum of moles of the isocyanurate groups and the allophanate groups of the polyisocyanate contained in the two-component coating systems of Comparative Examples 10-14 was less than 65:100. The coatings with a film thickness of 5 mm formed by the coating systems were prone to blistering and had large bubble area.

Those skilled in the art will readily understand that the present invention is not limited to the foregoing details, and can be implemented in other specific forms without departing from the spirit or main characteristics of the present invention. Therefore, the examples should be regarded as illustrative rather than restrictive from any point of view, so that the scope of the present invention is illustrated by the claims rather than the foregoing description. Therefore, any change shall be regarded as belonging to the present invention, as long as it falls into the meaning and scope of equivalents of the claims.

## Claims

1. A two-component coating system comprising component A comprising a polyaspartic acid ester and component B comprising a polyisocyanate, wherein the polyisocyanate has isocyanate functionality of not less than 4, and the polyisocyanate comprises allophanate groups and isocyanurate groups, and the ratio of moles of the allophanate groups to the sum of moles of the isocyanurate groups and the allophanate groups is of not less than 65:100.

2. The coating system according to claim 1, wherein the equivalent ratio of the isocyanate groups of component B to the amino groups of component A is of 0.5:1-10:1, most preferably 2:1-4:1.

3. The coating system according to claim 1 or 2, wherein the polyaspartic acid ester has the structure of formula I: 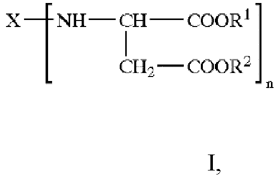 wherein,
X represents a n-valent organic segment that is non-reactive toward isocyanate groups at a temperature less than or equal to 100°C,
R¹ and R² are each independently organic groups that are non-reactive toward isocyanate groups under normal pressure and at a temperature less than or equal to 100°C,
n is an integer not less than 2.

4. The two-component coating system according to claim 3, wherein X has a structure that is one or more of aliphatic structures, araliphatic structures and cycloaliphatic structures, and most preferably cycloaliphatic structures.

5. The two-component coating system according to claim 3 or 4, wherein n is 2, and the polyaspartic acid ester is obtained by the reaction of the polyamine of formula II and the maleate and/or the fumarate of formula III:

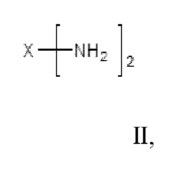

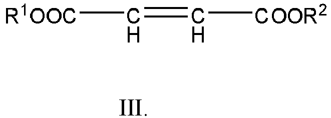

6. The two-component coating system according to any one of claims 1-5, wherein the isocyanate group content of the polyisocyanate is preferably 5% by weight to 30% by weight, relative to the total weight of the polyisocyanate.

7. The two-component coating system according to any one of claims 1-6, wherein the ratio of moles of the allophanate groups to the sum of moles of the isocyanurate groups and the allophanate groups is of not less than 68:100 and less than 1:1, more preferably 68:100-85:100, and most preferably 68:100-80:100.

8. A method for preparing the two-component coating system according to any one of claims 1-7 by mixing component A comprising a polyaspartic acid ester and component B comprising a polyisocyanate in any desired manner, wherein the polyisocyanate has isocyanate functionality of not less than 4, and the polyisocyanate comprises allophanate groups and isocyanurate groups, and the ratio of moles of the allophanate groups to the sum of moles of the isocyanurate groups and the allophanate groups is of not less than 65:100.

9. Use of the two-component coating system according to any one of claims 1-7 for filling gaps between substrates.

10. Use according to claim 9, wherein the substrate is ceramic tile, metal or concrete.

11. Grout or caulk comprising the two-component coating system according to any one of claims 1-7.

12. A product comprising a substrate and a coating formed by drying and curing the two-component coating system according to any one of claims 1 to 7.
